# EUROPÄISCHE PATENTSCHRIFT

(11) **EP 0 913 009 B1**
(45) Veröffentlichungstag und Bekanntmachung des Hinweises auf die Patenterteilung: **26.01.2000**
(21) Anmeldenummer: 97937485.7
(22) Anmeldetag: 15.07.1997
(51) Int. Cl.: H01M 8/02

(54) **STROMFÜHRENDES BAUTEIL FÜR EINE SCHMELZKARBONATBRENNSTOFFZELLE MIT KORROSIONSSCHUTZBESCHICHTUNG**
CURRENT-CARRYING COMPONENT FOR A FUSED CARBONATE FUEL CELL WITH ANTICORROSIVE COATING
ELEMENT CONSTITUTIF CONDUCTEUR DE COURANT POUR CELLULE ELECTROCHIMIQUE AU CARBONATE EN FUSION COMPORTANT UN REVETEMENT ANTICORROSION

(30) Priorität: 17.07.1996 DE 19628823
(43) Veröffentlichungstag der Anmeldung: 06.05.1999
(73) Patentinhaber: MTU MOTOREN- UND TURBINEN-UNION FRIEDRICHSHAFEN GMBH, 88040 Friedrichshafen (DE)
(72) Erfinder: HIERMAIER, Manfred, D-82194 Gröbenzell (DE); KLOSE, Reinhard, D-81479 München (DE); WIND, Jörg, 88090 Immenstaad (DE)
(74) Vertreter: Winter, Josef
(86) Internationale Anmeldenummer: EP9703777
(87) Internationale Veröffentlichungsnummer: WO9804012

(56) Entgegenhaltungen:
- DE-A- 19 523 637
- YUH C Y ET AL: "CARBONATE FUEL CELL ENDURANCE: HARDWARE CORROSION AND ELECTROLYTE MANAGEMENT STATUS" EXTENDED ABSTRACTS SPRING MEETING 1993 MAY 16-21 HONOLULU PENNINGTON, US, Bd. 93/1, 1993, Seite 1518/1519 XP000421779
- CHEMICAL ABSTRACTS, vol. 111, no. 8, 21.August 1989 Columbus, Ohio, US; abstract no. 60989, AKIMOTO A ET AL: "Separator for molten-carbonate fuel cell" XP002046835 & JP 01 003 962 A (HITACHI LTD) 9.Januar 1989 & PATENT ABSTRACTS OF JAPAN vol. 13, no. 173 (E-748), 24.April 1989 JP
- PATENT ABSTRACTS OF JAPAN vol. 014, no. 252 (E-0934), 30.Mai 1990 & JP 02 072562 A (FUJI ELECTRIC CO LTD), 12.März 1990,
- PATENT ABSTRACTS OF JAPAN vol. 009, no. 270 (E-353), 26.Oktober 1985 & JP 60 115173 A (MATSUSHITA DENKI SANGYO KK), 21.Juni 1985,

## Beschreibung

Die Erfindung betrifft den Korrosionsschutz von stromführenden Bauteilen von Schmelzkarbonatbrennstoffzellen. Insbesondere betrifft die Erfindung ein stromführendes Bauteil für eine Schmelzkarbonatbrennstoffzelle, insbesondere Anodenstromkollektor oder Bipolarplatte, mit einem Substrat aus Edelstahl und einer auf dem Substrat vorgesehenen Korrosionsschutzbeschichtung zum Schutz des Bauteils gegenüber der Anodengasatmosphäre und der Elektrolytschmelze der Brennstoffzelle.

Im Anodenraum einer Schmelzkarbonatbrennstoffzelle herrschen Bedingungen - aufkohlende Atmosphäre und niedriger Sauerstoffpartialdruck sowie Anwesenheit von Lithium- und Kaliumkarbonatschmelzen, welche zu einer raschen Korrosion von in den Schmelzkarbonatbrennstoffzellen enthaltenen Edelstahlkomponenten führen. Diese Korrosion wird durch die beim Betrieb von Schmelzkarbonatbrennstoffzellen herrschenden hohen Temperaturen wesentlich beschleunigt. Der Grund hierfür ist, daß die in der aufkohlenden, reduzierenden Atmosphäre gebildeten Oxidschichten, im Gegensatz zu solchen, die in einer oxidierenden Atmosphäre gebildet werden, nicht dicht und stabil sind und daher den verwendeten hochlegierten Edelstahl nicht zu schützen vermögen. Die sonst oft zum Korrosionsschutz von Edelstählen in aufkohlender Atmosphäre gewählte Verwendung von aluminiumhaltigen Stählen oder das Aluminieren der Stähle verbietet sich für stromführende Teile zur Verwendung in Brennstoffzellen, also insbesondere Anodenstromkollektoren oder Bipolarplatten wegen des sehr hohen elektrischen Widerstands der entstehenden Oxidschichten.

Ein weiteres Problem besteht in einer Neigung der geschmolzenen Salze des Elektrolyten zu einem Kriechen auf solchen metallischen Bauteilen. Dieses Kriechen ist einer der Verlustmechanismen des Elektrolyten und wirkt daher lebensdauerbegrenzend. Zudem begünstigt das Kriechen die Kontamination eines für den Betrieb der Schmelzkarbonatbrennstoffzellen vorgesehenen Spaltgasreaktionskatalysators und macht dadurch den Einsatz einer direkten internen Reformierung unmöglich, die energetisch besonders vorteilhaft wäre.

Prinzipiell können die Korrosion der Edelstahlkomponenten wie auch das Kriechen der geschmolzenen Salze auf den metallischen Bauteilen im Anodenraum von Schmelzkarbonatbrennstoffzellen durch eine Beschichtung der Edelstahlbleche mit Nickel verhindert werden, wie es bisher üblich ist. Nickel ist in der im Anodenraum enthaltenen Atmosphäre inert und wird von der Schmelze nicht benetzt. Das Beschichten der Bauteile mit Nickel geschieht bei flachen Komponenten z.B. durch Plattieren und bei Bauteilen mit einer dreidimensionalen Oberfläche durch galvanisches Beschichten. Jedoch treten auch hier bisher nicht gelöste Probleme auf. So entsteht bei galvanisch vernickelten Teilen allgemein das Problem, daß die gebildeten Schichten Poren aufweisen. Um eine Durchlässigkeit der porösen Schichten zu verhindern, muß galvanisch aufgebrachtes Nickel an der dünnsten Stelle mindestens 50 µm dick sein. Bei Bauteilen mit einer dreidimensionalen Form, wie einem anodenseitig verwendeten Stromkollektor, kann günstigstenfalls ein Dickenverhältnis von 2:1 von der dicksten zur dünnsten Stelle erreicht werden, was bei der Wahl der Beschichtungsdicke entsprechend zu berücksichtigen ist. Jedoch selbst bei einer Dicke von 50 µm ist noch eine Diffusion von Bestandteilen des Edelstahls wie Cr, Fe entlang der Korngrenzen der Nickelschicht an die Oberfläche des Bauteils und eine Diffusion von Sauerstoff von der Oberfläche in das Bauteil hinein zu beobachten. Dies führt zu Oxidbildung an den Korngrenzen der Nickelschicht und an der Grenzfläche zwischen der Nickelschicht und dem Edelstahlsubstrat.

Aus der DE 195 23 637 A1 geht bereits eine Korrosionsschutzbeschichtung für stromführende Bauteile von Schmelzkarbonatbrennstoffzellen, insbesondere Anodenstromkollektoren oder Bipolarplatten als bekannt hervor, wobei auf einem Substrat eine dünne Schicht eines nichtdiffundierenden Materials als Diffusionssperrschicht und auf der Diffusionssperrschicht eine dünne Schicht eines korrosionsbeständigen Materials aufgebracht ist. Als Substrat dient ein nicht rostender Stahl, als Korrosionsschutzschicht ist unter anderem Nickel, Gold oder Kupfer vorgesehen.

Die Aufgabe der Erfindung ist es ein stromführendes Bauteil für eine Schmelzkarbonatbrennstoffzelle zu schaffen, das einen verbesserten Korrosionsschutz aufweist.

Diese Aufgabe wird durch ein stromführendes Bauteil für eine Schmelzkarbonatbrennstoffzelle mit den in Anspruch 1 angegebenen Merkmalen gelöst.

Gemäß der Erfindung wird ein stromführendes Bauteil für eine Schmelzkarbonatbrennstoffzelle, insbesondere Anodenstromkollektor oder Bipolarplatte geschaffen, das ein Substrat aus Edelstahl und eine auf dem Substrat vorgesehene Korrosionsschutzbeschichtung zum Schutz des Bauteils gegenüber der Anodengasatmosphäre und der Elektrolytschmelze der Brennstoffzelle aufweist. Auf dem Substrat sind mindestens eine erste Schicht und eine zweite Schicht aus unterschiedlichen korrosionsschützenden Materialien mit guter elektrischer Leitfähigkeit ausgebildet. Die erste Schicht ist an der Oberfläche des Bauteils ausgebildet und die zweite Schicht ist zwischen der ersten Schicht und dem Substrat ausgebildet. Die erste Schicht besteht aus einem Material, das gegenüber der Anodengasatmosphäre inert ist und von der Elektrolytschmelze nicht benetzt wird, vorzugsweise aus Nickel, Gold oder Kupfer, während die zweite Schicht aus einem Material besteht, das sich mit dem Material der ersten Schicht im wesentlichen nicht mischt, nämlich Silber. Das letztgenannte Merkmal des sich nicht Mischens bezieht sich auf den üblichen Bereich der Betriebstemperaturen von Schmelzkarbonatbrennstoffzellen, also auf einen Temperaturbereich von etwa bis zu 600 bis 700°C.

Die Verwendung von Silber ist insbesondere von Vorteil bei Ausführungsformen, bei denen die erste Schicht aus Nickel besteht. In diesem Falle wandert das Silber entlang der Korngrenze des Nickels und verhindert so die Diffusion von Bestandteilen des Edelstahls und von Sauerstoff. Hierdurch wird die Bildung von Oxiden an den Korngrenzen und an der Grenzfläche zwischen Nickelbeschichtung und Substrat verhindert, so daß das Nickel weder in das Substrat diffundiert noch eine merkliche Interdiffusion der beiden Schichtmaterialien stattfindet.

Gemäß einer Weiterbildung der Erfindung sind auf dem Substrat drei oder mehr Schichten ausgebildet, wobei eine oder mehrere erste Schichten, die aus einem Material bestehen, das gegenüber der Anodengasatmosphäre inert ist und von der Elektrolytschmelze nicht benetzt wird, vorzugsweise Nickel, Gold oder Kupfer, und eine oder mehrere zweite Schichten, die aus einem Material bestehen, das sich mit dem Material der ersten Schichten im wesentlichen nicht mischt, nämlich Silber, und die alternierend angeordnet sind. Der Vorteil hiervon ist eine noch bessere Schutzwirkung der Korrosionsschutzbeschichtung.

Gemäß einer besonders vorteilhaften Ausführungsform ist an der Oberfläche des Bauteils eine erste Schicht ausgebildet, die aus einem gegenüber der Anodengasatmosphäre inerten und von der Elektrolytschmelze nicht benetzten Material besteht.

Hierdurch wird ein Angriff der korrosiven Anodengasatmosphäre und der Elektrolytschmelze bereits an der äußersten Schicht des Bauteils verhindert.

Gemäß einer Ausführungsform ist es vorgesehen, daß die ersten Schichten aus dem gleichen Material bestehen, wie es auch gemäß einer anderen Ausführungsform vorgesehen ist, daß die zweiten Schichten aus dem gleichen Material bestehen. Der Vorteil hiervon ist eine Vereinfachung des Herstellungsprozeßes zum Aufbau der Korrosionsschutzbeschichtung auf dem Bauteil.

Gemäß einer besonders vorteilhaften Ausführungsform bestehen die ersten Schichten aus Nickel und die zweiten Schichten aus Silber. Hierbei wandert wiederum beim Aufheizen der Brennstoffzelle das Silber entlang der Korngrenzen des Nickels und verhindert so die Diffusion von Bestandteilen des Edelstahls und Sauerstoff, so daß es nicht zur Bildung von Oxiden an den Korngrenzen und an der Grenzfläche von Beschichtung und Substrat kommt. Es wird eine Diffusion des Nickels sowohl in den Grundwerkstoff als auch eine Interdiffusion zwischen den beiden Schichtwerkstoffen verhindert. Wegen der Ausbildung in mehreren Schichten wird eine optimale Schutzwirkung erreicht.

Im folgenden werden Ausführungsbeispiele der Erfindung anhand der Zeichnung erläutert. Es zeigen:
Figur 1 eine schematisierte Querschnittsansicht durch ein mit einer Korrosionsschutzbeschichtung versehenes stromführendes Bauteil gemäß einem ersten Ausführungsbeispiel der Erfindung;
Figur 2 eine schematisierte Querschnittsansicht durch ein mit einer Korrosionsschutzbeschichtung versehenes stromführendes Bauteil gemäß einem zweiten Ausführungsbeispiel der Erfindung; und
Figur 3 eine schematisierte Querschnittsansicht durch ein mit einer Korrosionsschutzbeschichtung versehenes stromführendes Bauteil gemäß einem dritten Ausführungsbeispiel der Erfindung.

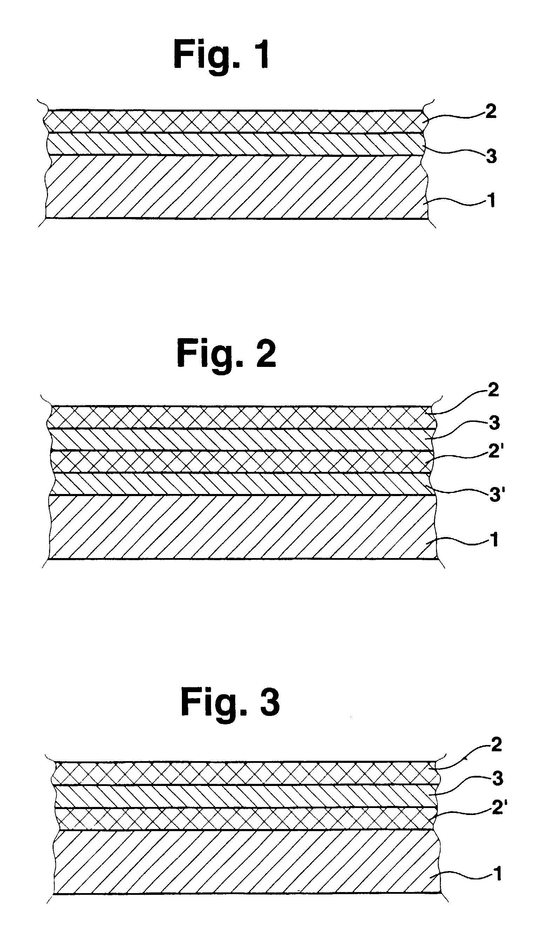

Figur 1 zeigt im Querschnitt ein stromführendes Bauteil für eine Schmelzkarbonatbrennstoffzelle, wie einen Anodenstromkollektor oder ein Bipolarplatte, das aus einem Substrat 1 aus Edelstahl besteht, auf dem eine Korrosionsschutzbeschichtung zum Schutz des Bauteils gegenüber der Anodengasatmosphäre und der Elektrolytschmelze der Brennstoffzelle ausgebildet ist. Die Korrosionsschutzbeschichtung besteht aus zwei Schichten 2,3 aus unterschiedlichen korrosionsschützenden Materialien, die eine gute elektrische Leitfähigkeit aufweisen. Die erste Schicht 2 ist an der Oberfläche des Bauteils ausgebildet und besteht aus einem Material, das gegenüber der Anodengasatmosphäre inert ist und von der Elektrolytschmelze nicht benetzt wird. Die zweite Schicht 3 ist zwischen der ersten Schicht 2 und dem Substrat 1 ausgebildet und besteht aus einem Material, das sich zumindest im Bereich der beim Betrieb einer Schmelzkarbonatbrennstoffzelle auftretenden Betriebstemperaturen von etwa bis zu 600 bis 700°C im wesentlichen nicht mit dem Material der ersten Schicht mischt.

Bei dem hier beschriebenen Ausführungsbeispiel besteht die erste Schicht 2 aus Nickel. Alternativ kann die erste Schicht aber auch zum Beispiel aus Gold oder aus Kupfer bestehen, oder aus einem anderen gegenüber der Anodengasatmosphäre inerten und von der Elektrolytschmelze nicht benetzten Material. Die zweite Schicht besteht bei dem vorliegenden Ausführungsbeispiel aus Silber. Die Verwendung von Silber für die zweite Schicht 3 ist bei stromführenden Bauteilen, bei denen Nickel für die erste Schicht 2 verwendet wird, von Vorteil, da das Silber beim Aufheizen der Brennstoffzelle entlang den Korngrenzen des Nickels wandert und somit eine Diffusion von Bestandteilen des Edelstahlmaterials des Substrats und von Sauerstoff verhindert, so daß es nicht zur Bildung von Oxiden an den Korngrenzen und/oder an der Grenzfläche von Schutzbeschichtung und Substrat 1 kommen kann. Somit diffundiert das Nickel weder in das Material des Substrats ein noch findet eine merkliche Interdiffusion zwischen den Materialien der beiden Schichten 2,3 statt.

Bei dem in Figur 2 dargestellten zweiten Ausführungsbeispiel der Erfindung sind auf einem Substrat 1 aus einem Edelstahlmaterial insgesamt vier Schichten ausgebildet, von denen zwei erste Schichten 2,2', die aus einem Material bestehen, das gegenüber der Anodengasatmosphäre inert ist und von der Elektrolytschmelze nicht benetzt wird, und zwei zweite Schichten 3,3', die aus einem Material bestehen, das sich mit dem Material der ersten Schichten 2,2' im wesentlichen nicht mischt, alternierend angeordnet sind. Dabei ist eine der beiden ersten Schichten 2, die aus einem gegenüber der Anondengasatmosphäre inerten und von der Elektrolytschmelze nicht benetzten Material besteht, an der Oberfläche des Bauteils ausgebildet, wogegen eine der beiden zweiten Schichten 3, das aus einem Material besteht, das sich mit dem Material der ersten Schichten 2,2' im wesentlichen nicht mischt, auf dem Substrat 1 ausgebildet ist.

Bei dem vorliegenden Ausführungsbeispiel sind die ersten Schichten 2,2' aus dem gleichen Material gebildet und auch die zweiten Schichten 3,3' sind aus dem gleichen Material gebildet. Die ersten Schichten 2,2' bestehen aus Nickel und die zweiten Schichten 3,3' bestehen aus Silber. Durch die alternierende Anordnung der aus Nickel bestehenden ersten Schichten 2,2' und der aus Silber bestehenden zweiten Schichten 3,3' wandert beim Aufheizen der Brennstoffzelle Silber entlang den Komgrenzen des Nickels und verhindert so die Diffusion von Bestandteilen des Edelstahlmaterials und von Sauerstoff durch die Nickelschichten 2,2', so daß eine Bildung von Oxiden an den Korngrenzen und an der Grenzfläche zwischen Substrat 1 und der aus den Schichten 2,2',3,3' bestehenden Korrosionsschutzbeschichtung verhindert wird.

Bei dem in Figur 3 dargestellten dritten Ausführungsbeispiel der Erfindung sind auf einem Substrat 1 aus einem Edelstahlmaterial insgesamt drei Schichten angeordnet, nämlich zwei erste Schichten 2,2', die auch bei diesem Ausführungsbeispiel aus Nickel bestehen, das gegenüber der Anodengasatmosphäre inert ist und von der Elektrolytschmelze nicht benetzt wird, und eine zwischen den beiden ersten Schichten 2,2' angeordnete Schicht 3, die aus Silber besteht, das sich mit dem Material der ersten Schichten 2,2' im wesentlichen nicht mischt. Durch die erste Schicht 2 wird das Bauteil gegenüber der Anodengasatmosphäre und der Elektrolytschmelze geschützt. Aus der zwischen den beiden aus Nickel bestehenden ersten Schichten 2,2' angeordneten aus Silber bestehenden zweiten Schicht 3 wandert beim Aufheizen der Brennstoffzelle Silber entlang den Komgrenzen in jede der beiden Nickelschichten 2,2', so daß sowohl eine Diffusion von Bestandteilen des Edelstahlmaterials des Substrats 1 in die auf dem Substrat 1 angeordnete Nickelschicht 2' als auch die Diffusion von Sauerstoff durch die an der Oberfläche des Bauteils befindliche Nickelschicht 2 verhindert wird. Somit wird wiederum die Bildung von Oxiden an den Komgrenzen und eine Oxidation an der Grenzfläche zwischen Substrat 1 und Korrosionsschutzbeschichtung verhindert.

Abweichend von den zweiten und dritten Ausführungsbeispielen der Figuren 2 und 3 sind auch andere Ausführungsbeispiele mit einer größeren Anzahl von Schichten möglich, bei denen auf dem Substrat 1 drei oder mehr Schichten ausgebildet sind, von denen eine oder mehrere erste Schichten aus einem Material bestehen, das gegenüber der Anodengasatmosphäre inert ist und/oder von der Elektrolytschmelze nicht benetzt wird. Die zweite Schicht besteht hingegen in jedem Fall aus Silber.

## Patentansprüche

1. Stromführendes Bauteil für eine Schmelzkarbonatbrennstoffzelle, insbesondere Anodenstromkollektor oder Bipolarplatte, mit einem Substrat (1) aus Edelstahl und einer auf dem Substrat (1) vorgesehenen Korrosionsschutzbeschichtung zum Schutz des Bauteils gegenüber der Anodengasatmosphäre und der Elektrolytschmelze der Brennstoffzelle, wobei auf dem Substrat (1) mindestens eine erste Schicht (2) und eine zweite Schicht (3) aus unterschiedlichen korrosionsschützenden Materialien mit guter elektrischer Leitfähigkeit ausgebildet sind, wobei die erste Schicht (2) an der Oberfläche des Bauteils ausgebildet ist und die zweite Schicht (3) zwischen der ersten Schicht (2) und dem Substrat (1) ausgebildet ist, und wobei die erste Schicht (2) aus einem Material besteht, das gegenüber der Anodengasatmosphäre inert ist und von der Elektrolytschmelze nicht benetzt wird, und die zweite Schicht (3) aus einem Material besteht, das sich mit dem Material der ersten Schicht (2) im wesentlichen nicht mischt, dadurch gekennzeichnet, daß die zweite Schicht (3) aus Silber besteht.

2. Stromführendes Bauteil nach Anspruch 1, dadurch gekennzeichnet, daß die erste Schicht (2) aus Nickel, Gold oder Kupfer besteht.

3. Stromführendes Bauteil nach Anspruch 1 oder 2, dadurch gekennzeichnet, daß auf dem Substrat (1) drei oder mehr Schichten ausgebildet sind, die aus einer oder mehreren ersten Schichten (2,2'), und einer oder mehreren zweiten Schichten (3,3'), bestehen, die jeweils alternierend angeordnet sind.

4. Stromführendes Bauteil nach Anspruch 3, dadurch gekennzeichnet, daß an der Oberfläche des Bauteils eine erste Schicht (2) ausgebildet ist.

5. Stromführendes Bauteil nach Anspruch 3 oder 4, dadurch gekennzeichnet, daß die ersten Schichten (2,2') aus dem gleichen Material bestehen.

6. Stromführendes Bauteil nach Anspruch 3, 4 oder 5, dadurch gekennzeichnet, daß die zweiten Schichten (3,3') aus dem gleichen Material bestehen.

## Claims

1. Current-carrying component for a molten carbonate fuel cell, in particular anode current collector or bipolar plate, having a stainless-steel substrate (1) and an anticorrosion coating which is provided on the substrate (1) and is intended to protect the component from the anode gas atmosphere and the electrolyte melt of the fuel cell, at least one first layer (2) and one second layer (3) of different anticorrosion materials with good electrical conductivity being formed on the substrate (1), the first layer (2) being formed on the surface of the component and the second layer (3) being formed between the first layer (2) and the substrate (1), and the first layer (2) consisting of a material which is inert in relation to the anode gas atmosphere and does not wet the electrolyte melt, and the second layer (3) consisting of a material which is essentially immiscible with the material of the first layer (2), characterized in that the second layer (3) consists of silver.

2. Current-carrying component according to Claim 1, characterized in that the first layer (2) consists of nickel, gold or copper.

3. Current-carrying component according to Claim 1 or 2, characterized in that three or more layers, which consist of one or more first layers (2, 2') and one or more second layers (3, 3') that are respectively arranged alternately, are formed on the substrate (1).

4. Current-carrying component according to Claim 3, characterized in that one first layer (2) is formed on the surface of the component.

5. Current-carrying component according to Claim 3 or 4, characterized in that the first layers (2, 2') consist of the same material.

6. Current-carrying component according to Claim 3, 4 or 5, characterized in that the second layers (3, 3') consist of the same material.

## Revendications

1. Composant conducteur de courant pour une cellule électrochimique au carbonate en fusion, en particulier un collecteur de courant anodique ou une plaque bipolaire, avec un substrat (1) en acier spécial et un revêtement anticorrosion prévu sur le substrat (1) pour la protection du composant vis-à-vis de l'atmosphère du gaz anodique et de la masse fondue de l'électrolyte de la cellule électrochimique, le substrat (1) étant recouvert d'au moins une première couche (2) et d'une seconde couche (3) de différents matériaux anticorrosion ayant une bonne conductibilité électrique, la première couche (2) étant formée à la surface du composant et la seconde couche (3) entre la première couche (2) et le substrat (1), et la première couche (2) étant constituée d'un matériau inerte vis-à-vis de l'atmosphère du gaz anodique et qui ne soit pas mouillé par la masse fondue de l'électrolyte, et la seconde couche (3) étant constituée d'un matériau qui ne se mélange essentiellement pas avec le matériau de la première couche (2), caractérisé en ce que la seconde couche (3) est constituée d'argent.

2. Composant conducteur de courant selon la revendication 1, caractérisé en ce que la première couche (2) est constituée de nickel, d'or ou de cuivre.

3. Composant conducteur de courant selon la revendication 1 ou 2, caractérisé en ce que le substrat (1) est recouvert de trois couches ou plus constituées d'une ou de plusieurs premières couches (2, 2') et d'une ou de plusieurs secondes couches (3, 3') qui sont respectivement disposées en alternance.

4. Composant conducteur de courant selon la revendication 3, caractérisé en ce que la surface du composant est recouverte d'une première couche (2).

5. Composant conducteur de courant selon la revendication 3 ou 4, caractérisé en ce que les premières couches (2, 2') sont constituées du même matériau.

6. Composant conducteur de courant selon la revendication 3, 4 ou 5, caractérisé en ce que les secondes couches (3, 3') sont constituées du même matériau.
